# EUROPEAN PATENT APPLICATION

(11) **EP 4 407 053 A1**
(43) Date of publication of application: **31.07.2024**
(21) Application number: 22868483.3
(22) Date of filing: 22.08.2022
(51) Int. Cl.: C22B 1/14, C22B 1/24, C22B 1/242, C22B 1/243, C22B 1/244, C10L 5/06

(54) **COLD-PRESSED SOLID AGGLOMERATE AND METHOD FOR PRODUCING SAME**

(30) Priority: 20.09.2021 BR 102021018716
(71) Applicant: Tecnored Desenvolvimento Tecnologico S.A., CEP-12401-010 Pindamonhangaba São Paulo (BR)
(72) Inventor: DE OLIVEIRA, Ronald, Lopes, 12405-278 Pindamonhangaba, SP (BR); GONÇALVES, Guilherme Francisco, 12412-520 Pindamonhangaba, SP (BR); POTTER, Stephen Michael, 22250-145 Rio de Janeiro, RJ (BR); BRASIL, Ludmila, Lopes, Nascimento, 22290-240 Rio de Janeiro, RJ (BR); BENEVIDES, Jozilene, Pereira, 12403-620 Pindamonhangaba, SP (BR); TAVARES, Haroldo, de Souza, 12444-331 Pindamonhangaba, SP (BR); GONÇALVES, Claudecir, Silva, 12445-660 Pindamonhangaba, SP (BR); RAMOS, Celso, 85505-445 Pato Branco, PR (BR)
(74) Representative: Potter Clarkson
(86) International application number: PCT/BR2022/050327
(87) International publication number: WO 2023/039652

(57) **Abstract**

The present invention relates to a cold-pressed solid agglomerate using an organic binder. In this context, the present invention provides a cold-pressed solid agglomerate containing a mixture which, in turn, comprises at least one main compound and at least one organic binder, wherein the at least one organic binder is obtained by the chemical reaction of starch under controlled pH through at least one alkali in an aqueous medium and at room temperature. Additionally, the present invention provides a process for producing a cold-pressed solid agglomerate, comprising the steps of (i) mixing at least one main compound with at least one organic binder and (ii) cold-pressing the mixture to form an agglomerate, in which the at least one organic binder is obtained by the chemical reaction of starch under controlled pH through at least one alkali in an aqueous medium and at room temperature.

## Description

### FIELD OF THE INVENTION

The present invention refers to solid agglomerates. In particular, the present invention concerns a cold-pressed solid agglomerate using an organic binder.

### BACKGROUND OF THE INVENTION

The cold agglomeration process consists of grouping together fine-grained materials to obtain a larger product by using binders. This process allows high-quality metal agglomerates or coal briquettes to be obtained, for example, by using fractions made up of smaller particles that would normally be discarded.

Coal briquetting is one of the different cold agglomeration processes gaining ground in the industry. This technique, which can be used for both mineral and vegetable coal, typically involves the following steps: (i) granulometric balancing of the coal or biomass particles; (ii) mixing of binders (agglomerants); (iii) mechanical compaction; and (iv) drying of the briquettes..

Binders used in the briquetting process can be of mineral or organic origin. These binders play an important role in the formation of briquettes, giving thermoplastic properties (plasticity, toughness, and resistance to compression) to green briquettes and after drying. One of the most widely used organic binders in the coal briquetting industry today is corn flour or corn starch that has been thermally treated by extrusion or drum dryer at temperatures between 130 and 150°C.

Both heat-treated corn flour and corn starch require relatively expensive and complex equipment and facilities to manufacture. Also, the thermo-modification process that flour and/or cornstarch go through breaks down their molecular chains, which significantly reduces their binding properties. This implies higher quantities of binder in the briquette, which makes the final product more expensive and reduces its calorific value, as a higher proportion of binder is found in briquettes to the detriment of charcoal or biomass.

Finally, it should be noted that the industry has been developing and looking for alternatives to improve the performance and properties of physical briquettes, from their formation (green) to their burning in furnaces or steel reactors. In this regard, the use of powdered (or liquid) additives in briquette composition is now quite common for improving certain briquette characteristics. In this scenario, the prior art binder has limitations, because the agglomerated mass sometimes has a lower percentage of moisture (free water) than necessary to fully gelatinize the flour and heat-treated starch in powder form. This condition hinders the development of the adhesive characteristics of the heat-treated corn flour or starch binder.

The present invention aims to solve said problems in a practical and efficient way.

### SUMMARY OF THE INVENTION

The main purpose of the present invention is to provide a cold-pressed solid agglomerate and a process for producing it using a binder that is easy to manufacture, eliminating the need for equipment, installations, and the use of thermal energy to industrialize the binder.

A second purpose of the present invention is to provide a cold-pressed solid agglomerate and a process for producing it that uses a smaller amount of binder.

A third purpose of the present invention is to provide a cold-pressed solid agglomerate and a process for producing it that uses a liquid binder at room temperature, miscible in water, which is fluid, easy to incorporate, easy to dissolve additives in the mixture and provides operational practicality.

In order to achieve the objectives described above, the present invention provides a cold-pressed solid agglomerate containing a mixture which, in turn, comprises at least one main compound and at least one organic binder, where at least one organic binder is obtained by the chemical reaction of starch under controlled pH through at least one alkali in an aqueous medium and at room temperature.

Moreover, the present invention provides a process for producing a cold-pressed solid agglomerate, comprising the steps of (i) mixing at least one main compound with at least one organic binder and (ii) cold-pressing the mixture to form an agglomerate, in which at least one organic binder is obtained by the chemical reaction of starch under controlled pH through at least one alkali in an aqueous medium and at room temperature.

### DETAILED DESCRIPTION OF THE INVENTION

Preliminarily, it should be noted that the following description will start from preferred embodiments of the invention. As will be evident to those skilled in the art, however, the invention is not limited to these particular embodiments.

The present invention provides a cold-pressed solid agglomerate and a process for producing it. The cold-pressed solid agglomerate of the present invention comprises a mixture which, in turn, contains at least one main compound and at least one organic binder.

The main compound can be, for example, at least one of biomass, charcoal, and mineral coal. Such a compound may be a mixture of different coals or biomass, possibly with different compositions and granulometries. Alternatively, the main compound can be at least one metal, which will give rise to a metal agglomerate.

Preferably, at least one organic binder is obtained by the chemical reaction of starch under controlled pH by means of at least one alkali in an aqueous medium and at room temperature. More preferably, at least one alkali is sodium hydroxide.

Preferably, at least one organic binder is obtained using reagents in the following mass proportions:
Water: 83 to 87.5%;
Starch: 12 to 16%;
Sodium Hydroxide: 0.5 to 1%.

The starch to be used in the reaction of the present invention is preferably regular corn starch, also known as native corn starch. The sodium hydroxide used in the reaction of the present invention is preferably 10% to 50% sodium hydroxide (aqueous sodium hydroxide solution)..

Preferably, at least one organic binder generated in the chemical reaction is in the form, so that additives can be diluted in a practical way.

The process of producing the cold-pressed solid agglomerate according to the present invention comprises the steps of (i) mixing at least one main compound with at least one organic binder; and (ii) cold-pressing the mixture to form the agglomerate, so that at least one organic binder is obtained by the chemical reaction of starch under controlled pH through at least one alkali in an aqueous medium and at room temperature.

Optionally, the process of the present invention comprises the step of adding an additive to the mixture prior to the step of cold pressing the mixture.

Optionally, the process of the present invention comprises the step of drying the solid agglomerate after the step of cold pressing the mixture.

Tests have shown that the cold-pressed solid agglomerate according to the present invention, obtained by the process described above, has significantly superior physical properties when compared to the agglomerate of the prior art, which has extruded or drum-dried thermally modified corn flour and/or starch as a binder. **Table 1** below shows the results of various tests for the agglomerate of the present invention, specifically the green coal briquette, and for the agglomerate of the prior art.

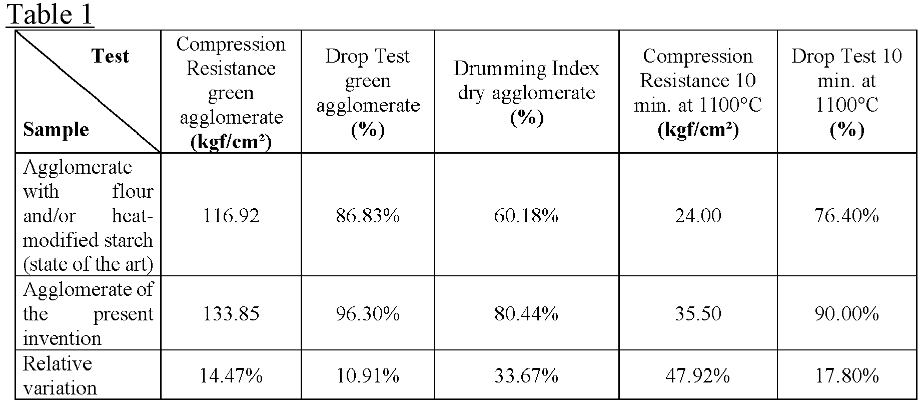

As can be seen, the solid agglomerate according to the present invention showed considerably better results than the agglomerate of the prior art, which uses flour and/or thermo-modified starch as a binder. The results presented by the green briquettes showed that the greater degree of gelatinization promoted by the chemical reaction of the binder provided greater adhesion between the particles of the agglomerate and consequently better performance in terms of tenacity (drop test) and greater resistance to compression.

In addition to the property gains mentioned above, since the process for obtaining the organic binder used in the agglomerate of the present invention is not thermomechanical, there is no breakdown of the starch molecules, which does not reduce its binding properties. As a result, there is a saving of up to 70% of the binder used in the manufacture of the agglomerate of the present invention when compared to the agglomerate of the prior art. This also contributes to significantly increasing the purity of the agglomerate by increasing the fraction of the main compound (coal, for example) in the product.

Therefore, as explained above, the present invention provides a cold-pressed solid agglomerate and a process for producing it that uses a binder that is easy to manufacture, eliminating the need for extruding machines and the use of thermal energy to process the starch. In addition, the present invention uses a liquid binder, allowing additives to be dissolved in the mixture easily and practically. Finally, the technique of the present invention uses significantly less binder, increasing the purity of the solid agglomerate when compared to prior art agglomerates.

Numerous variations affecting the scope of protection of the present application are permitted. This reinforces that the present invention is not limited to the embodiments described above.

## Claims

1. Cold-pressed solid agglomerate, comprising:
a mixture comprising at least one main compound and at least one organic binder;
**characterized in that** at least one organic binder is obtained by the chemical reaction of starch under controlled pH with at least one alkali in an aqueous medium and at room temperature..

2. Agglomerate according to claim 1, **characterized in that** it is an agglomerate made up of carbon-based or ferrous compounds.

3. Agglomerate according to claim 1 or 2, **characterized in that** the at least one organic binder is obtained by means of the reagents in the following proportions by mass:
Water: 83 to 87.5%;
Starch: 12 to 16%;
Sodium Hydroxide: 0.5 to 1%.

4. Agglomerate according to any one of claims 1 to 3, **characterized in that** the starch is a regular corn starch.

5. Agglomerate according to any one of claims 1 to 4, **characterized in that** the at least one organic binder is miscible in water and fluid at room temperature.

6. Agglomerate according to any one of claims 1 to 5, **characterized in that** it additionally comprises at least one additive.

7. The process of producing a cold-pressed solid agglomerate, comprising the following steps:
mixing at least one main compound with at least one organic binder; and
cold press the mixture to form an agglomerate,
**characterized in that** at least one organic binder is obtained by the chemical reaction of starch under controlled pH with at least one alkali in an aqueous medium and at room temperature..

8. Process according to claim 7, **characterized in that** the chemical reaction step has the reagents in the following mass proportions:
Water: 83 to 87.5%;
Starch: 12 to 16%;
Sodium Hydroxide: 0.5 to 1%.

9. Process according to claim 7 or 8, **characterized in that** it comprises the step of adding an additive to the mixture prior to the step of cold pressing the mixture.

10. Process according to any one of claims 7 to 9, **characterized in that** it further comprises the step of drying the solid agglomerate after the step of cold pressing the mixture.
